Europäisches Patentamt

(19) European Patent Office  (11) Publication number: **0 176 324**

Office européen des brevets  **B1**

(12) **EUROPEAN PATENT SPECIFICATION**

(45) Date of publication of patent specification: **25.04.90**  (51) Int. Cl.⁵: **H 04 N 5/76, H 04 N 5/04, G 11 B 27/02**

(21) Application number: **85306688.4**

(22) Date of filing: **19.09.85**

(54) **System synchronizing apparatus.**

(30) Priority: **19.09.84 JP 196428/84**
**25.10.84 JP 225039/84**
**09.11.84 JP 236034/84**

(43) Date of publication of application:
**02.04.86 Bulletin 86/14**

(45) Publication of the grant of the patent:
**25.04.90 Bulletin 90/17**

(84) Designated Contracting States:
**DE GB NL**

(56) References cited:
**WO-A-81/03406**
**DE-A-3 036 036**
**FR-A-2 424 606**
**US-A-4 009 331**
**US-A-4 450 490**

(73) Proprietor: **VICTOR COMPANY OF JAPAN, LIMITED**
**12, 3-chome, Moriya-Cho Kanagawa-ku**
**Yokohama-Shi Kanagawa-Ken 221 (JP)**

(72) Inventor: **Kasuga, Masao**
**No. 1423 Hirao**
**Inagi-Shi Tokyo (JP)**
Inventor: **Kikuchi, Mitsuru**
**No. 2-16-105 Wakabadai Asahi-Ku**
**Yokohama-Shi Kanagawa-Ken (JP)**
Inventor: **Fujii, Yasuhiko**
**No. 4-2-2, Nishitsuruma**
**Yamato-Shi Kanagawa-Ken (JP)**

(74) Representative: **Robinson, John Stuart et al**
**MARKS & CLERK 57/60 Lincoln's Inn Fields**
**London WC2A 3LS (GB)**

Courier Press, Leamington Spa, England.

# Description

The present invention generally relates to system synchronizing apparatuses, and more particularly to a system synchronizing apparatus for obtaining synchronism between a video signal which is reproduced from a recording medium in a first recording and reproducing apparatus and audio signals which are reproduced from a recording medium in the form of a video signal in a second recording and reproducing apparatus which employs a television system different from a television system employed in the first recording and reproducing apparatus.

Recently, video signal recording and reproducing apparatuses (video tape recorders, or simply VTRs) are put into various use. For example, the VTR may be used in a digital audio system, and in such a case, digital audio signals are recorded on and reproduced from a magnetic tape in the form of a video signal. On the other hand, there is a case where the recording or reproduction is carried out by use of two VTRs which are synchronized with each other. It is essential to operate the two VTRs in synchronism when the VTRs are used to record, edit, and reproduce video and/or audio signals.

As an example of a case where two VTRs are operated in synchronism, there is a case where a video signal reproduced from a magnetic tape in a first VTR and audio signals reproduced from a magnetic tape in the form of a video signal in a second VTR are synchronized with each other and recorded on a master tape or a master disc. In this case, when the first and second VTRs employ the same television system, the reproduced output signals of the first and second VTRs have the same video signal format and the reproduced output signals can be synchronized with ease. However, when the first VTR employs the PAL system and the second VTR employs the NTSC system, for example, that is, when the first and second VTRs employ mutually different television systems, the reproduced output signals of the first and second VTRs cannot be synchronized as they are. Hence, in order to synchronize the reproduced output signals of two VTRs employing mutually different television systems, the reproduced output signal of the first VTR employing the PAL system, for example, is conventionally converted into a signal of the NTSC system so that the converted signal can be synchronized with the reproduced output signal of the second VTR employing the NTSC system.

However, the number of scanning lines is 625 lines per two fields (per frame) and the number of fields is fifty fields per second in the PAL system, while the number of scanning lines is 525 scanning lines per two field (per frame) and the number of fields is sixty fields per second in the NTSC system. Accordingly, in order to convert the television system of the reproduced output signal of the first VTR from the PAL system to the NTSC system, it is necessary to reduce the number of scanning lines by extracting and omitting fifty scanning lines per field and increase the number of fields by adding ten fields per second. The number of scanning lines is reduced by extracting and omitting one scanning line for approximately every six scanning lines so that fifty scanning lines are omitted in one field. When the length of one scanning line is represented by $T$, a signal having a gap of 50T in one field is obtained by switching delay lines. A gap of 250T, that is, a gap of approximately one field, is obtained by collecting each gap of 50T in a time period of five fields by use of delay lines. Hence, gaps amounting to approximately ten fields are obtained over a time period of fifty fields, and the reproduced output signal is converted into a reproduced video signal which is substantially of the NTSC system by repeatedly using the signals of previous fields in place of the gaps which amount to the ten fields.

Similarly, when converting a reproduced video signal of the NTSC system into a reproduced video signal of the PAL system, the number of scanning lines is increased by adding fifty scanning lines per field and the number of fields is reduced of omitting ten fields per second.

However, there is a disadvantage in that a circuit for converting the television system of the reproduced video signal from the PAL system to the NTSC system, for example, is complex and expensive. In addition, there is a disadvantage in that the picture quality of the reproduced video signal becomes deteriorated when the television system conversion is carried out. Accordingly, it is undesirable to use a television system converting circuit when synchronizing the reproduced output signals of two VTRs employing mutually different television systems.

According to the present invention, there is provided a system synchronizing apparatus as defined in the appended claim 1.

Preferred embodiments of the invention are defined in the other appended claims.

It is thus possible to provide a system synchronizing apparatus which obtains from a digital audio system reproduced audio signals which are synchronized with a reproduced video signal from a video system, by comparing a first time code which is reproduced in a first recording and reproducing apparatus which constitutes the video system and employs a first television system with a second time code which is reproduced from a second recording and reproducing apparatus which constitutes the digital audio system together with a digital audio processor and employs a second television system, and at least controlling the second recording and reproducing apparatus responsive to a difference in the time codes so that phases of the time codes coincide for every predetermined frame address of one of the time codes and controlling the first and second recording and reproducing apparatuses according to the needs so that starting points of the first and second time codes coincide.

It is also possible to provide a system synchronizing apparatus which stores into a memory the reproduced audio signals from the second recording and reproducing apparatus, and obtains from the digital audio system audio signals which are synchronized with the reproduced video signals from the video system by controlling a read-out address of the memory responsive to the difference in the time codes. The audio signals obtained from the digital audio system can be variably delayed by a time which is dependent on the control of the read-out address of the memory. The present invention will be further described, by way of example, with reference to the accompanying drawings, in which:

FIG. 1 is a system block diagram showing an embodiment of the system synchronizing apparatus according to the present invention;

FIG. 2 is a system block diagram showing a concrete construction of the apparatus show in FIG. 1;

FIGS. 3(A) through 3(D) show signal waveforms for explaining the operation of the apparatus shown in FIG. 2;

FIG. 4 is a system block diagram showing an embodiment of an essential part of the block system shown in FIG. 2;

FIG. 5 shows an embodiment of a pulse generator shown in FIG. 4;

FIG. 6 is a flow chart for explaining the operation of a central processing unit when a time code converting part shown in FIG. 1 is constituted by the central processing unit;

FIG. 7 is a system block diagram showing another embodiment of an essential part of the block system shown in FIG. 2;

FIG. 8 is a concrete circuit diagram showing an essential part of the block system in FIG. 7; and

FIGS. 9A and 9B are flow charts for explaining the operation of a central processing unit shown in FIG. 8.

A video tape recorder (hereinafter simply referred to as a VTR) is designed to record on a magnetic tape a time code together with a video signal. The time code indicates a position on the magnetic tape so that it is possible to detect the position on the magnetic tape at the time of an editing or the like. The time code comprises a code part for indicating the hour, a code part for indicating the minutes, a code part for indicating the seconds, and a code part for indicating the frame address. A VTR employing the NTSC system generally uses an SMPTE (Society of Motion Picture and Television Engineers) time code, and a VTR employing the PAL system generally uses an EBU (European Broadcasting Union) time code. The code parts of the SMPTE time code indicating the hour, minutes, and seconds respectively coincide with the code parts of the EBU time code indicating the hour, minutes, and seconds. However, the number of frames in the NTSC system is thirty per second, while the number of frames in the PAL system is twenty-five per second. Hence, the code part of the SMPTE time code indicating the frame address changes from zero to twenty-nine and repeats such a frame address change. On the other hand, the code part of the EBU time code indicating the frame address changes from zero to twenty-four and repeats such a frame address change. In other words, the code part of the SMPTE time code indicating the frame address does not coincide with the code part of the EBU time code indicating the frame address. However, when both the frame addresses of the SMPTE and EBU time codes start from zero, the sixth frame address of the SMPTE time code coincides in time with the fifth frame address of the EBU time code. Similarly, the twelfth, eighteenth, and twenty-fourth frame addresses of the SMPTE time code respectively coincide in time with the tenth, fifteenth, and twentieth frame addresses of the EBU time code. That is, every sixth frame address of the SMPTE time code coincides in time with every fifth frame address of the EBU time code. The present invention notes such coincidences in time between the frame address of the SMPTE time code and the frame address of the EBU time code, and uses this relationship between the two time codes to synchronize two VTRs employing mutually different television systems.

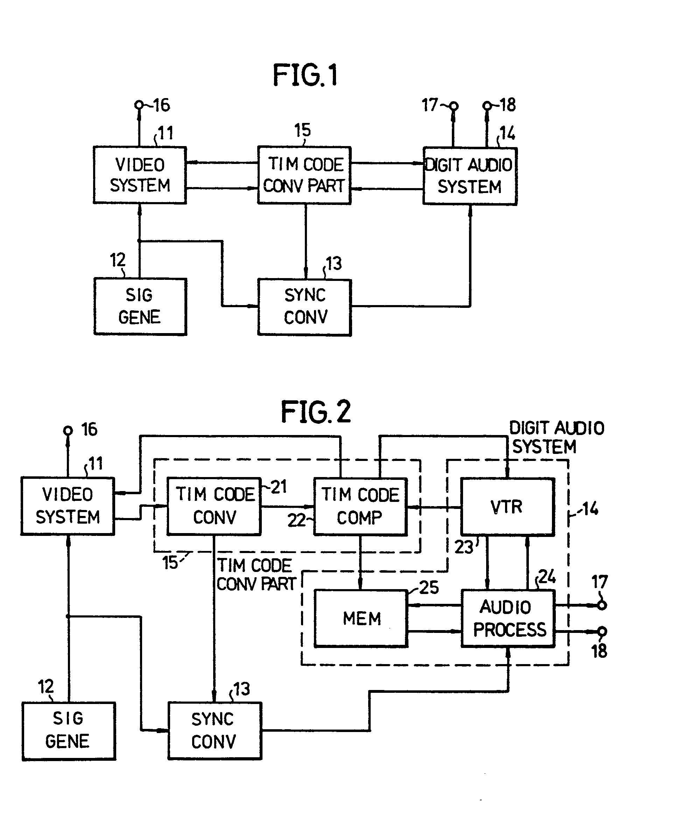

FIG. 1 shows an embodiment of the system synchronizing apparatus according to the present invention. In the present embodiment, description will be given with respect to a case where the synchronism is to be obtained between an output video signal of a video system employing the PAL system and output audio signals which are in the form of a video signal and are obtained from a digital audio system employing the NTSC system.

A video system 11 comprises a VTR which employs the PAL system, and is supplied with a PAL system synchronizing signal from a signal generator 12. The output PAL system synchronizing signal of the signal generator 12 is also supplied to a synchronizing signal converting part 13. A digital audio system 14 comprises a VTR which employs the NTSC system and a digital audio processor such as a PCM (Pulse Code Modulation) processor. A time code converting part 15 compares an EBU time code within a reproduced signal obtained from the video system 11 and an SMPTE time code within a reproduced signal obtained from the digital audio system 14, and supplies to the synchronizing signal converting part 13 a control signal for matching the phases of the two time codes for every predetermined frame address of one of the two time codes. The synchronizing signal converting part 13 generates a synchronizing signal having a frequency of 30 Hz based on the output synchronizing signal of the signal generator 12, with a timing responsive to the control signal obtained from the time code converting part 15. The digital audio system 14 is controlled responsive to the output synchronizing signal of the synchronizing signal converting part 13 so that the phases of the two time codes coincide for every predetermined frame address of one of the two time codes. The time code converting part 15 compares the EBU time code and the SMPTE time code the phases of which coincide for every predetermined frame address of one of the two time codes, and controls the digital audio system 14 by a control signal which is responsive to the difference between the two time codes so that every sixth frame address of the SMPTE time code coincides in time with every fifth frame address of the EBU time code. As a result, audio signals which are produced from the digital audio processor and obtained through output terminals 17 and 18, are synchronized with a video signal which is obtained through an output terminal 16.

Normally, the VTR of the video system 11 is started first and the VTR of the digital audio system 14 is started thereafter. Hence, the EBU time code obtained from the VTR of the video system 11 does not coincide with the SMPTE time code obtained from the VTR of the digital audio system 14, and the difference between the two time codes may be considerably large. In such a case, control signals may be supplied from the time code converting part 15 to both the video system 11 and the digital audio system 14 so that the synchronism may be obtained quickly.

Next, description will be given with respect to a concrete construction of the system synchronizing apparatus shown in FIG. 1, by referring to FIG. 2. In FIG. 2, those parts which are the same as those corresponding parts in FIG. 1 are designated by the same reference numerals, and description thereof will be omitted.

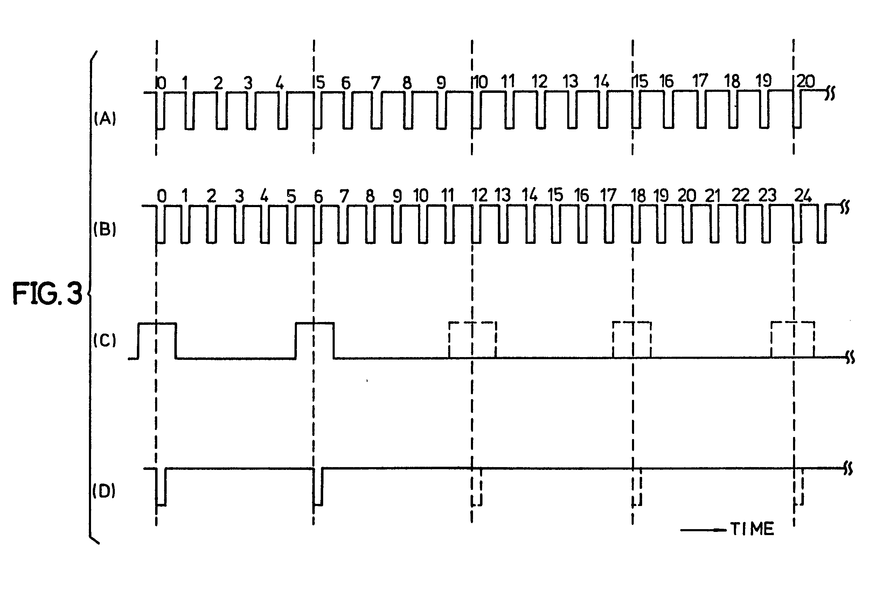

In FIG. 2, the time code converting part 15 comprises a time code converter 21 and a time code comparator 22. The digital audio system 14 comprises a VTR 23 which employs the NTSC system, a digital audio processor 24, and a memory 25. For example, a digital audio processor VP-900 manufactured by Victor Company of Japan, Ltd. may be used for the digital audio processor 24. The time code converter 21 is supplied with the EBU time code within the reproduced signal which is obtained from the VTR of the video system 11 employing the PAL system, and converts the EBU time code into a SMPTE time code or a time code in accordance with the SMPTE time code. FIGS. 3(A) and 3(B) respectively show the timings of the EBU time code which is supplied to the time code converter 21 and the SMPTE time code which is generated from the time code converter 21, in correspondence with frame pulse signals of the respective systems. In FIGS. 3(A) and 3(B), numbers indicated above the signal waveform represent the numbers of the frame addresses. The time code converter 21 supplies to the synchronizing signal converting part 13 a control signal having a timing responsive to the time code obtained from the video system 11, and the synchronizing signal converting part 13 generates a synchronizing signal (frame pulse signal shown in FIG. 3(B)) having a frequency of 30 Hz based on the output synchronizing signal of the signal generator 12 with a timing responsive to the control signal from the time code converter 21. The output synchronizing signal of the synchronizing signal converting part 13 is supplied to the digital audio processor 24. As a result, the VTR 23 is controlled by the output synchronizing signal of the synchronizing signal converting part 13 by way of the digital audio processor 24 so that the phase of the SMPTE time code within the reproduced signal from the VTR 23 coincides with the phase of the SMPTE time code obtained from the time code converter 21.

The time code comparator 22 compares the time code from the time code converter 21 and the time code from the VTR 23, and controls the VTR 23 responsive to the difference between the two time codes so that the difference between the two time codes falls within a predetermined range. For example, in the case where the difference between the two time codes is greater than ±20 frames in frame address, the tape moving mode of the VTR 23 is controlled to a fast-forward mode, a rewind mode, a pause mode or the like responsive to the output control signal of the time code comparator 22 so that the difference between the two time codes falls within the range of ±20 frames in frame address.

The VTR of the video system 11 and the VTR 23 may become out of synchronism when the tape moving mode of the VTR 23 is controlled as described above. However, because the synchronism between the VTR of the video system 11 and the VTR 23 is controlled based on the output synchronizing signal of the signal generator 12, the non-synchronous state will be corrected and no problems will occur.

Audio signals which are reproduced in the form of the video signal in the VTR 23, are subjected to a predetermined signal processing in the digital audio processor 24 and are supplied to the memory 25 as digital audio signals. In the present embodiment, the memory 25 has such a memory capacity that digital audio signals corresponding to forty frames of the video signal can be stored therein, for example. Accordingly, when the digital audio signals are written into the memory 25 with the frame address thereof advanced by twenty frames compared to that of the time code obtained from the time code converter 21, it is possible to obtain from the output terminals 17 and 18 audio signals which are synchronized with the video signal obtained from the output terminal 16 by controlling the read-out timing (that is, the read-out address) of the memory 25 within a range of ±20 frames in frame address. Because the digital audio system 14 is controlled by taking the video system 11 as a reference, the VTR 23 is started after the VTR of the video system 11 is started. However, by controlling the VTR 23 so that the operation of the VTR 23 is advanced by twenty frames in frame address with respect to the operation of the VTR in the video system 11, it is possible to write the digital audio signals into the memory 25 with the frame address thereof advanced by twenty frames in frame address compared to that of the time code obtained from the time code converter 21. In other words, when the difference between the two time codes obtained in the time code comparator 22 falls within the range of ±20 frames in frame address, digital audio signals which are subsequent or prior in time to the digital audio signals which are presently being written into the memory 25 by a certain number of frames in frame address corresponding to the difference between the two time codes are read out from the memory 25 responsive to the control signal from the time code comparator 22. For example, in the case where the time code from the VTR 23 is advanced by five frames in frame address compared to the time code from the time code converter 21, the digital audio signals of fifteen frames in frame address prior to that of the digital audio signals presently being written into the memory 25 are read out from the memory 25 responsive to the control signal from the time code comparator 22, when it is assumed that the digital audio signals are written into the memory 25 with the frame address thereof advanced by twenty frames in frame address compared to that of the time code obtained from the time code converter 21 as described before. In this case, the digital audio signals read out from the memory 25 are subjected to a digital-to-analog conversion in the digital audio processor 24, and the audio signals obtained through the output terminals 17 and 18 are in synchronism with the video signal obtained through the output terminal 16.

The apparatus may be designed so that the timing with which the digital audio signals are read out from the memory 25 can be controlled arbitrarily responsive to an external control signal. For example, there is a case where starting points of the time codes recorded on the magnetic tapes which are played on the VTR of the video system 11 and the VTR 23 are mutually deviated in time due to some cause introduced at the time of the recording. When such magnetic tapes are played, the audio signals obtained from the output terminals 17 and 18 become synchronized with the video signal obtained from the output terminal 16 when the time codes compared in the time code comparator 22 coincide, however, the reproduced picture obtained from the video signal and the reproduced sound obtained from the audio signals will actually be mutually deviated in the time base and the reproduced picture and the reproduced sound will not be in true synchronism with each other. Hence, this deviation in the time base caused by the mutually deviated starting points of the time codes recorded on the magnetic tapes at the time of the recording, can be compensated for by shifting the read-out timing of the memory 25 responsive to the external control signal. On the other hand, instead of using the external control signal, an offset value corresponding to the deviation in the time base may be set in the time code comparator 22 so that the time code comparator 22 compares one of the two time codes with a sum of the offset value and the other of the time codes.

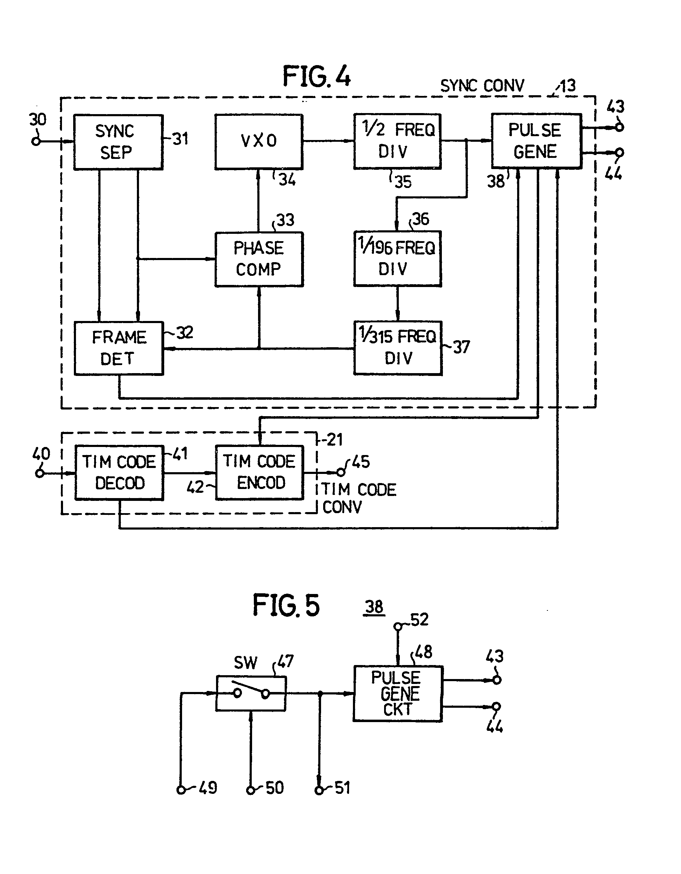

An embodiment of a part of the system synchronizing apparatus corresponding to the synchronizing signal converting part 13 and the time code converter 21 shown in FIG. 2, is shown in FIG. 4. A composite synchronizing signal from the signal generator 12 is applied to an input terminal 30 and is supplied to a synchronizing signal separating circuit 31 which separates from the composite synchronizing signal a horizontal synchronizing signal and a vertical synchronizing signal having a frequency of 50 Hz. The separated horizontal synchronizing signal is supplied to a frame detector 32, and the separated vertical synchronizing signal is supplied to a phase comparator 33 and the frame detector 32. A crystal oscillator 34 generates an output signal having an oscillation frequency of 6.174 MHz, and this output signal of the oscillator 34 is passed through a 1/2 frequency divider 35, a 1/196 frequency divider 36, and a 1/315 frequency divider 37. An output signal of the 1/315 frequency divider 37 having a frequency of 50 Hz is supplied to the phase comparator 33 and the frame detector 32. The phase comparator 33 compares the output vertical synchronizing signal of the synchronizing signal separating circuit 31 and the output signal of the 1/315 frequency divider 37 and controls the output oscillation phase of the oscillator 34 responsive to the phase difference between the compared signals. Thus, the frame detector 32 generates a frame pulse signal shown in FIG. 3(A) having a frequency of 25 Hz and supplies this frame pulse signal to a pulse generator 38. The pulse generator 38 is also supplied with an output signal of the 1/2 frequency divider 35 having a frequency of 3.087 Mhz.

The EBU time code obtained from the video system 11 is applied to an input terminal 40 and is decoded in a time code decoder 41. The time code decoder 41 supplies the decoded data to a time code encoder 42, and also supplies to the pulse generator 38 a control signal having a timing shown in FIG. 3(C). The control signal shown in FIG. 3(C) is generated by detecting the fourth, ninth, fourteenth, nineteenth, and twenty-fourth frame addresses of the EBU time code. Accordingly, a frame pulse signal shown in FIG. 3(B) having a frequency of 30 Hz is generated from the pulse generator 38 and is obtained through an output terminal 44. The phase of every sixth pulse in the frame pulse signal having the frequency of 30 Hz coincides with the phase of every fifth pulse in the frame pulse signal shown in FIG. 3(A) having the frequency of 25 Hz. In addition, the signal from the 1/2 frequency divider 35 having a frequency of 3.087 Mhz, is obtained through an output terminal 43. This signal having the frequency of 3.087 Mhz may be used to form a master clock signal, for example. The pulse generator 38 supplies to the time code encoder 42 a control signal having a timing shown in FIG. 3(D). The time code encoder 42 encodes the decoded data from the time code decoder 41 responsive to the control signal from the pulse generator 38, and generates an SMPTE time code or a time code in accordance with the SMPTE time code. The output SMPTE time code of the time code encoder 42 is obtained through an output terminal 45. The frame pulse signal from the output terminal 44 is supplied to the digital audio processor 24, and the SMPTE time code from the output terminal 45 is supplied to the time code comparator 22.

FIG. 5 shows an embodiment of the pulse generator 38 shown in FIG. 4. The pulse generator 38 comprises a switching circuit 47 and a pulse generating circuit 48. The frame pulse signal shown in FIG. 3(A) which has the frequency of 25 Hz and is obtained from the frame detector 32, is applied to a terminal 49 and is supplied to the switching circuit 47. The control signal shown in FIG. 3(C) is applied to a terminal 50 and is supplied to the switching circuit 47 so as to close the switching circuit 47 only during a high-level period of this control signal. As a result, the control signal shown in FIG. 3(D) is obtained from the switching circuit 47 and is supplied to the time code encoder 42 through a terminal 51. The pulse generating circuit 48 generates the frame pulse signal shown in FIG. 3(B) having the frequency of 30 Hz responsive to an output control signal of the switching circuit 47, and this frame pulse signal is obtained through the output terminal 44. The output signal of the 1/2 frequency divider 35 having the frequency of 3.087 Mhz is applied to a terminal 52, and the signal having the frequency of 3.087 Mhz is obtained through the output terminal 43.

It is possible to provide a counter for counting the pulses in the frame pulse signal obtained from the terminal 49 and for applying a control signal to the terminal 50 every time five frame pulses are counted. In this case, the control signal from the time code decoder 41 is not used, and for this reason, the circuit construction of the time code decoder 41 can be simplified.

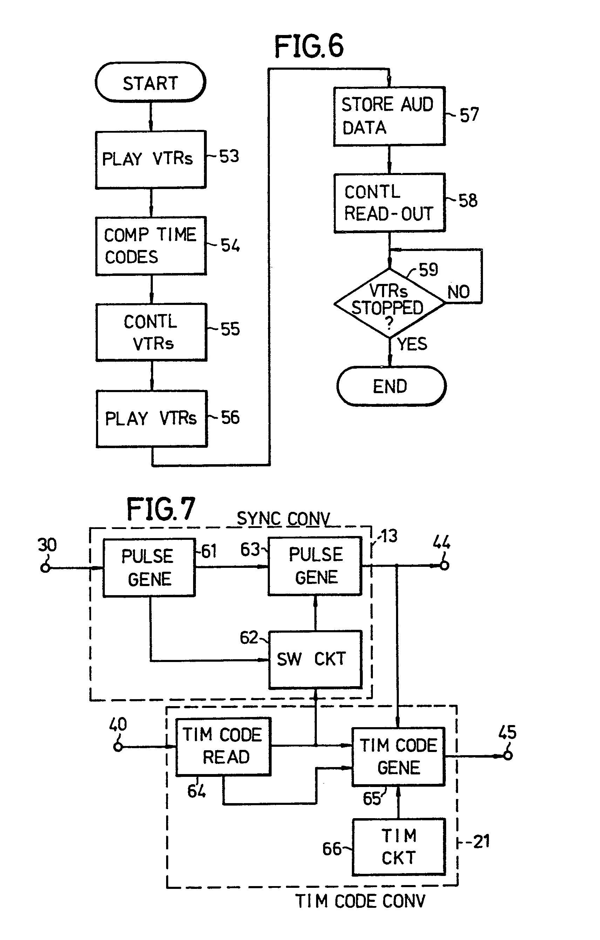

The time code converting part 15 shown in FIG. 1 may be constituted by a central processing unit (CPU). The operation of the CPU for the case where the time code converting part 15 is constituted by the CPU is shown in the flow chart of FIG. 6. When the operation of the CPU is started in FIG. 6, a step 53 puts each of the first VTR of the video system 11 and the second VTR of the digital audio system 14 in a play mode. A step 54 converts the EBU time code reproduced in the first VTR into an SMPTE time code and compares the converted time code with the SMPTE time code reproduced in the second VTR. A step 55 controls the first and second VTRs so that the operation of the second VTR is advanced by twenty frames in frame address compared to the operation of the first VTR. When the control of the first and second VTRs is completed, a step 56 again puts each of the first and second VTRs in the play mode. A step 57 writes into a memory the digital audio signals which are obtained by digitally converting in the digital audio processor within the digital audio system 14 the audio signals which are reproduced in the form of the video signal in the second VTR. A step 58 controls the read-out address of the memory from which the digital audio signals are read out responsive to the difference between the compared time codes. The operation of the CPU is ended when a step 59 discriminates that both the first and second VTRs are stopped.

In the case where the reproduced video signal from the first VTR and the reproduced audio signals from the digital audio processor are not in synchronism with each other even after the step 58 is performed, the read-out address of the memory may be controlled manually.

Next, description will be given with respect to another embodiment of an essential part of the system synchronizing apparatus corresponding to the synchronizing signal converting part 13 and the time code converting part 21, by referring to FIG. 7. The output synchronizing signal of the signal generator 12 is applied to the input terminal 30 and is supplied to a pulse generator 61. The pulse generator 61 generates a frame pulse signal shown in FIG. 3(A) having a frequency of 25 Hz which is synchronized with the output synchronizing signal of the signal generator 12, and a clock signal having a frequency which is a multiple of both 25 Hz and 30 Hz. The clock signal is used to generate a master clock signal. The output frame pulse signal of the signal generator 61 is supplied to a switching circuit 62, and the output clock pulse of the signal generator 61 is supplied to a pulse generator 63.

The EBU time code from the video system 11 is applied to the input terminal 40 and is supplied to a time code reader 64. The time code reader 64 produces the data of the EBU time code, and further, produces a switching signal (control signal) corresponding to the fifth, tenth, fifteenth, twentieth, and zeroth frame addresses of the EBU time code by detecting the fourth, ninth, fourteenth, nineteenth, and twenty-fourth frame addresses of the EBU time code. The switching signal has the same waveform as that of the control signal shown in FIG. 3(C). The data of the EBU time code is supplied to an SMPTE time code generator 65, and the switching signal is supplied to the switching circuit 62 and the time code generator 65. The switching circuit 62 passes out of the 25 Hz frame pulse signal obtained from the pulse generator 61 only the signal parts corresponding to the zeroth, fifth, tenth, fifteenth, and twentieth frame addresses of the EBU time code responsive to the switching signal. Hence, a pulse signal shown in FIG. 3(D) is obtained from the switching circuit 62 and is supplied to the pulse generator 63. As a result, the pulse generator 63 generates a frame pulse signal shown in FIG. 3(B) having a frequency of 30 Hz based on the clock signal from the pulse generator 61, with a timing of the pulse signal obtained from the switching circuit 62. This frame pulse signal having the frequency of 30 Hz is obtained through the output terminal 44, and is also supplied to the time code generator 65.

The time code generator 65 detects out of the 30 Hz frame pulse signal obtained from the pulse generator 63 the signal parts corresponding to every sixth pulse responsive to the switching signal described before. The time code generator 65 generates an SMPTE time code in accordance with the EBU time code obtained at each point in time when the signal part corresponding to a sixth pulse is detected, and the generated SMPTE time code is obtained through the output terminal 45. The timing with which the time code generator 65 operates is controlled by an output signal of a timing circuit 66. Therefore, the SMPTE time code obtained through the output terminal 45 is in synchronism with the EBU time code applied to the input terminal 40.

For example, when it is assumed that the data of the EBU time code obtained from the time code reader 64 at the point in time when a predetermined signal part of the 30 Hz frame pulse signal from the pulse generator 63 is detected by the time code generator 65 responsive to the switching signal indicates twenty-three hours, nineteen minutes, fifty seconds, and frame address five (that is, the fifth frame address), an SMPTE time code which starts from twenty-three hours, nineteen minutes, fifty seconds, and frame address six (that is, the sixth frame address) is obtained from the output terminal 45. The SMPTE time code may start from either one of the zeroth, sixth, twelfth, eighteenth, and twenty-fourth frame addresses which are respectively in phase synchronism with the zeroth, fifth, tenth, fifteenth, and twentieth frame addresses of the EBU time code. In addition, since the output frame pulse signal of the pulse generator 63, the EBU time code, and the switching signal are respectively synchronized with the output synchronizing signal of the signal generator 12, the synchronism described above between the EBU time code and the SMPTE time code is maintained once the synchronism is obtained between the EBU time code and the SMPTE time code. Accordingly, once the synchronism described above is obtained between the EBU time code and the SMPTE time code, the operation of synchronizing the SMPTE time code with the EBU time code is unnecessary until the two VTRs stop.

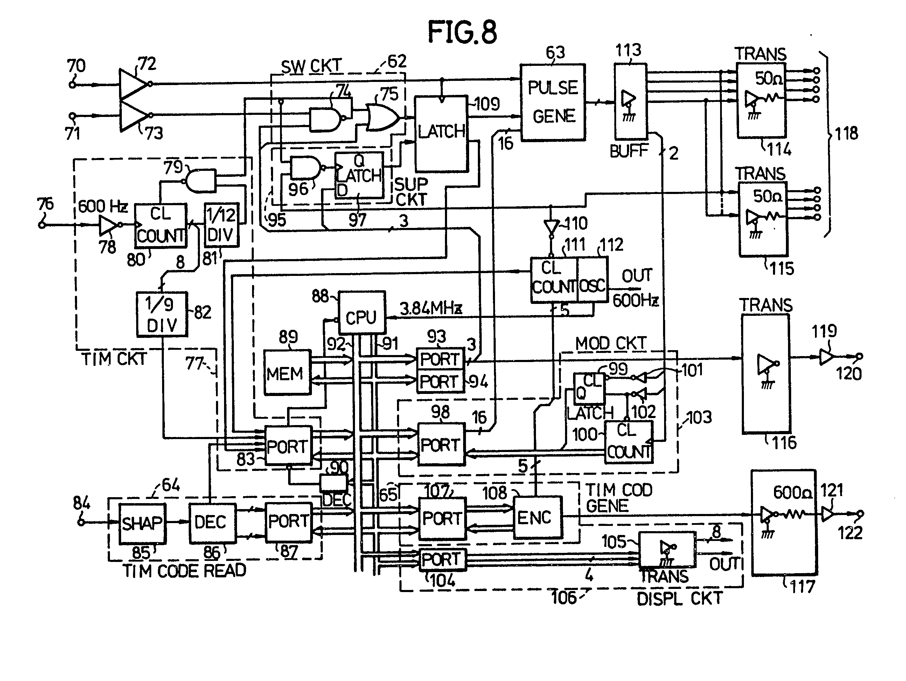

FIG. 8 shows an embodiment of a concrete circuit of an essential part of the block system shown in FIG. 7. In FIG. 8, those parts which are the same as those corresponding parts in FIG. 7 are designated by the same reference numerals, and description thereof will be omitted.

The clock signal and the 25 Hz frame pulse signal from the pulse generator 61 are applied to respective input terminals 70 and 71. The input terminal 70 is coupled to the pulse generator 63 through an inverter 72, and the input terminal 71 is coupled through an inverter 73 to the switching circuit 62 which comprises a NAND gate 74 and an OR gate 75. A signal having a frequency of 600 Hz, for example, is applied to an input terminal 76 and is supplied to a timing circuit 77 which comprises an inverter 78, a NAND gate 79, a counter 80, a 1/12 frequency divider 81, a 1/9 frequency divider 82, and a port 83. The reproduced EBU time code from the video system 11 is applied to an input terminal 84 and is supplied to the time code reader 64 which comprises a wave shaping circuit 85, an EBU decoder 86, and a port 87.

A central processing unit (CPU) 88 controls the circuit shown in FIG. 8, and for example, a CPU HD6803 manufactured by Hitachi, Ltd. of Japan may be used for the CPU 88. A memory 89 is a read only memory (ROM) or the like which prestores programs. An address decoder 90 decodes an address obtained via an address bus 91. A port 93 is coupled to a data bus 92, and a port 94 is coupled to the address bus 91. A supervisory circuit 95 comprises a NAND gate 96 and a latch circuit 97, and supervises the synchronous state between the 25 Hz frame pulse signal and the 30 Hz frame pulse signal. A modulating circuit 103 comprises a port 98, a latch circuit 99, a counter 100, and inverters 101 and 102, and modulates the SMPTE time code. A display circuit 106 comprises a port 104 and a transmitter 105, and displays the time code. The time code generator 65 comprises a port 107 and an SMPTE encoder 108. In addition to the circuits described heretofore, the circuit shown in FIG. 8 comprises a latch circuit 109, an inverter 110, a counter 111, an oscillator 112, a buffer 113, and transmitters 114 through 117. An output terminal group 118 is coupled to the digital audio processor within the digital audio system 14. The transmitter 116 is coupled to an output terminal 120 through an amplifier 119, and the transmitter 117 is coupled to an output terminal 122 through an amplifier 121. For example, the output terminals 120 and 122 are coupled to a synchronizer (not shown) which operates the video system 11 and the digital audio system 14 while maintaining synchronism between the two systems.

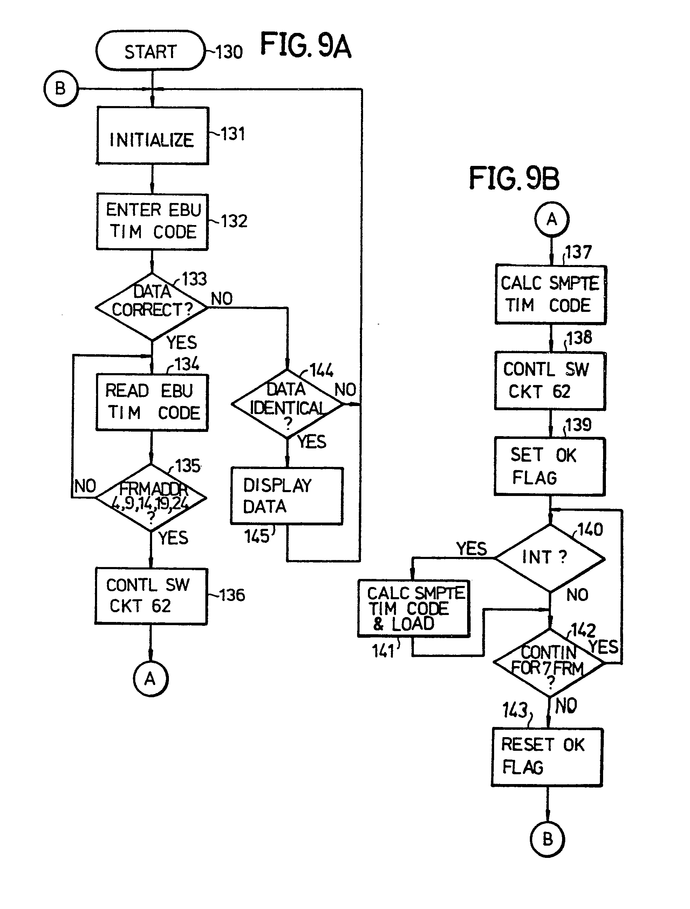

Next, the operation of the CPU 88 which controls the time code generator 65 and the like will be described in conjunction with the flow charts shown in FIGS. 9A and 9B. When the operation of the CPU 88 starts in a step 130, a step 131 performs an initializing operation such as clearing registers within the CPU 88. A step 132 enters the data of the EBU time code obtained from the time code reader 64, and a step 133 discriminates whether or not the data is obtained continuously for three frames and the correct data is obtained. In other words, when the data is obtained continuously for three frames, the step 133 discriminates that the VTR of the video system 11 is operating. When the discrimination result in the step 133 is YES, a step 134 reads the data of the EBU time code. A step 135 discriminates whether or not the frame address of the data which is read is the fourth, ninth, fourteenth, nineteenth, or twenty-fourth frame address. When the discrimination result in the step 135 is NO, the operation is returned to the step 134. On the other hand, when the discrimination result in the step 135 is YES, a step 136 controls the switching circuit 62 so as to pass out of the 25 Hz frame pulse signal supplied to the switching circuit 62 the signal part corresponding to the next frame address, that is, the signal part corresponding to the fifth, tenth, fifteenth, twentieth, or zeroth frame address. Accordingly, the pulse signal shown in FIG. 3(D) is obtained from the switching circuit 62.

A step 137 generates an SMPTE time code in accordance with the data of the EBU time code which is obtained, and stores the SMPTE time code within the CPU 88. In this state, every sixth pulse of the frame pulse signal obtained from the pulse generator 63 is in phase synchronism with every fifth pulse of the frame pulse signal obtained from the pulse generator 61. Thus, a step 138 controls the switching circuit 62 so that the pulse signal is no longer obtained from the switching circuit 62. A step 139 sets an OK flag. The OK flag in the set state thereof indicates that the data of the EBU time code is continuous and the data is correct, and that the SMPTE time code which is obtained is synchronized with the EBU time code. For example, the OK flag is set within the synchronizer described before.

A step 140 discriminates whether or not an interrupt signal for the next frame is obtained from the port 83. When the interrupt signal is obtained from the port 83 and the discrimination result in the step 140 is YES, a step 141 adds a data corresponding to one frame to the data of the SMPTE time code and loads the data which is added with the data corresponding to one frame into the modulating circuit 103. On the other hand, when the discrimination result in the step 140 is NO or when the step 141 is completed, a step 142 discriminates whether or not the data of the EBU time code is continuous for seven frames, for example. When the discrimination result in the step 142 is YES, the operation is returned to the step 140. On the other hand, when the discrimination result in the step 142 is NO, a step 143 resets the OK flag and the operation is returned to the step 131.

In the case where the discrimination result in the step 133 is NO, a step 144 discriminates whether or not the data of the EBU time code is identical for three frames, for example. When the discrimination result in the step 144 is NO, the operation is returned to the step 131. On the other hand, when the discrimination result in the step 144 is YES, a step 145 displays the EBU time code and the operation is thereafter returned to the step 131.

In the embodiments described heretofore, description is given with respect to a case where the VTR of the video system 11 employs the PAL system and the VTR of the digital audio system 14 employs the NTSC system. However, the VTR of the video system 11 may employ the NTSC system and the VTR of the digital audio system 14 may employ the PAL system, for example. In this case, a simple modification may be made to the time code converting part 15 so that the synchronizing signal converting part 13 generates a frame pulse signal of 25 Hz. Moreover, the two different television system in the VTR of the video system and the VTR of the digital audio system are not limited to the PAL system and the NTSC system.

**Claims**

1. A system synchronizing apparatus for obtaining synchronism between a video signal within a signal reproduced from a recording medium in a first recording and reproducing apparatus which employs a first television system and constitutes a video system (11) and audio signals reproduced from a recording medium in the form of a video signal in a second recording and reproducing apparatus which employs a second television system and constitutes a digital audio system (14) together with a digital audio processor, characterized in that said system synchronizing apparatus comprises: synchronizing signal generating means (12) for generating a first synchronizing signal which determines a timing with which said video system (11) operates, said first synchronizing signal being supplied to said video system (11); time code converting means (15) for comparing a first time code which is of a first system and is within the reproduced signal from said first recording and reproducing apparatus with a second time code which is of a second system and is within the reproduced signal from said second recording and reproducing apparatus (23), and for generating a control signal having a timing in accordance with a timing of the first time code, said first and second time codes each indicating a position on the recording medium; and synchronizing signal converting means (13) for generating a second synchronizing signal based on the first synchronizing signal from said synchronizing signal generating means (12) with a timing responsive to the output control signal of said time code converting means (15), said second synchronizing signal being supplied to said digital audio system (14) and controlling a timing with which said digital audio system operates so that phases of the first and second time codes coincide for every predetermined frame address of one of the first and second time codes, said time code converting means controlling by an output control signal thereof at least said digital audio system responsive to a difference between the first and second time codes so that starting points of the first and second time codes coincide.

2. A system synchronizing apparatus as claimed in claim 1, characterized in that said time code converting means (13) comprises a time code converter (21) for converting the first time code from said video system into a third time code which is of the second system or a system in accordance with the second system, and for supplying to said synchronizing signal converting means (13) a control signal having a timing in accordance with the timing of the first time code, and a time code comparator (22) for comparing the third time code from said time code converter and the second time code from said digital audio system.

3. A system synchronizing apparatus as claimed in claim 2, characterized in that there is further provided memory means (25) for storing digital audio signals which are obtained by digitally converting the reproduced signal from said second recording and reproducing apparatus in said digital audio processor, said time code comparator (22) controlling by an output signal thereof a read-out address of said memory means so that reproduced audio signals in synchronism with the reproduced video signals obtained from said video system are produced from said digital audio system.

4. A system synchronizing apparatus as claimed in claim 3, characterized in that said time code converting means (15) also controls by an output control signal thereof said video system so that the second time code of the digital audio signals written into said memory means (25) is constantly advanced in time or simultaneous in time with respect to the first time code of the reproduced video signal obtained from said video system.

5. A system synchronizing apparatus as claimed in claim 2, characterized in that said time code converting means (15) comprises a time code decoder (41) for decoding data of the first time code and for generating a control signal in accordance with the timing of the first time code, and a time code encoder (42) for encoding the decoded data from said time code decoder into the third time code which is of the second system or the system in accordance with the second system.

6. A system synchronizing apparatus as claimed in claim 5, characterized in that said synchronizing signal converting means (13) comprises a circuit (31-37) responsive to the first synchronizing signal for generating a third synchronizing signal which is in synchronism with the first synchronizing signal and has a frequency equal to a frame frequency of said first television system and a clock signal having a frequency which is a multiple of both frame frequencies of said first and second television systems, and pulse generating means (38) for generating the second synchronizing signal which has a frequency equal to the frame frequency of said second television system by use of said third synchronizing signal, said clock signal, and the control signal from said time code decoder (41).

7. A system synchronizing apparatus as claimed in claim 6, characterized in that said pulse generating means (38) comprises a switching circuit (47) applied with said third synchronizing signal and a pulse generating circuit (48) for generating the second synchronizing signal by use of an output of said switching circuit and said clock signal, said switching circuit being controlled by the output control signal of said time code decoder (41), said output of said switching circuit controlling a timing with which said time code encoder (42) operates.

8. A system synchronizing apparatus as claimed in claim 6, characterized in that the frame frequency of said first television system is equal to 25 Hz and the frame frequency of said second television system is equal to 30 Hz.

9. A system synchronizing apparatus as claimed in claim 2, characterized in that said time code converter (21) comprises a time code reader (64) for producing data of the first time code obtained from said video system and for producing a switching signal in correspondence with predetermined frame addresses of the first time code, a time code generator (65), and a timing circuit (66) for controlling by an output thereof a timing with which said time code generator operates; and said synchronizing signal converting means (13) comprises a first circuit (61) responsive to the first synchronizing signal for generating a third synchronizing signal which is in synchronism with the first synchronizing signal and has a frequency equal to a frame frequency of said first television system and a clock signal having a frequency which is a multiple of both frame frequencies of said first and second television systems, a switching circuit (62) responsive to said switching signal for only passing out of the third synchronizing signal a signal part corresponding to a predetermined frame address of the first time code, and a second circuit (63) for generating the second synchronizing signal which has a frequency equal to the frame frequency of said second television system by use of said clock signal and an output of said switching circuit, said time code generator generating the third time code which is of the second system based on the data of the first time code responsive to the second synchronizing signal and the switching signal.

10. A system synchronizing apparatus as claimed in claim 1, characterized in that said first time code which is of the first system is an EBU time code, said second time code which is of the second system is an SMPTE time code, and said synchronizing signal converting means (13) controls by an output control signal thereof said digital audio system so that a phase of every fifth frame address of the EBU time code coincides with a phase of every sixth frame address of the SMPTE time code.

11. A system synchronizing apparatus as claimed in claim 1, characterized in that said time code converting means (15) comprises a central processing unit.

**Patentansprüche**

1. Systemsynchronisiervorrichtung zur Herstellung von Synchronität zwischen einem Videosignal in einem Signal, das von einem Aufzeichnungsträger in einem ersten Aufzeichnungs- und Wiedergabegerät wiedergegeben wurde, das ein erstes Fernsehsystem benutzt und ein Videosystem (11) bildet, und Audiosignalen, die von einem Aufzeichnungsträger in Form eines Videosignals in einem zweiten Aufzeichnungs- und Wiedergabegerät wiedergegeben wurde, das ein zweites Fernsehsystem benutzt und ein digitales Audiosystem (14) zusammen mit einem digitalen Audioprozessor bildet, dadurch gekennzeichnet, daß die erwähnte Systemsynchronisiervorrichtung aufweist: Synchronisiersignalerzeugungsmittel (12) zum Erzeugen eines ersten Synchronisiersignals, das den Takt bestimmt, mit dem das erwähnte Videosystem (11) arbeitet, wobei das erwähnte erste Synchronisiersignal dem erwähnten Videosystem (11) zugeführt wird; Zeitzeichenumsetzmittel (15) zum Vergleichen eines ersten Zeitzeichens eines ersten Systems in einem wiedergegebenen Signal aus dem erwähnten ersten Aufzeichnungs- und Wiedergabegerät mit einem zweiten Zeitzeichen eines zweiten Systems in dem wiedergegebenen Signal aus dem erwähnten zweiten Aufzeichnungs- und Wiedergabegerät (23) und zum Erzeugen eines Steuersignals mit einem Takt, der mit einem Takt des ersten Zeitzeichens übereinstimmt, wobei das erwähnte erste und zweite Zeitzeichen jeweils eine Position auf dem Aufzeichnungsträger darstellen; und Synchronisiersignalumsetzmittel (13) zum Erzeugen eines zweiten Synchronisiersignals auf der Basis des ersten Synchronisiersignals von den erwähnten Synchronisiersignalerzeugungsmitteln (12) mit einem Takt in Abhängigkeit von dem Ausgangssteuersignal der erwähnten Zeitzeichenumsetzmittel, wobei das erwähnte zweite Synchronisiersignal dem erwähnten digitalen Audiosystem (14) zugeführt wird und einen Takt steuert, mit dem das erwähnte digitale Audiosystem arbeitet, so daß Phasenlagen des ersten und zweiten Zeitzeichens bei jeder vorbestimmten Bildadresse des einen der beiden Zeitzeichen zusammenfallen, wobei die erwähnten Zeitzeichenumsetzmittel durch ein eigenes Ausgangssteuersignal wenigstens das erwähnte digitale Audiosystem in Abhängigkeit von einer Differenz zwischen dem ersten und dem zweiten Zeitzeichen so steuern, daß Anfangspunkte des ersten und zweiten Zeitzeichens zusammenfallen.

2. Systemsynchronisiervorrichtung nach Anspruch 1, dadurch gekennzeichnet, daß das Zeitzeichenumsetzmittel (15) einen Zeitzeichenumsetzer (21) zum Umsetzen des ersten Zeitzeichens aus dem erwähnten Videosystem in ein drittes Zeitzeichen des zweiten Systems oder eines dem zweiten System entsprechenden Systems und zur Abgabe eines Steuersignals mit einem dem Takt des ersten Zeitzeichens entsprechenden Takt an das erwähnte Synchronisiersignalumsetzmittel (13) sowie einen Zeitzeichenvergleicher (22) zum Vergleichen des dritten Zeitzeichens aus dem erwähnten Zeitzeichenumsetzer mit dem zweiten Zeitzeichen aus dem erwähnten digitalen Audiosystem aufweist.

3. Systemsynchronisiervorrichtung nach Anspruch 2, dadurch gekennzeichnet, daß ferner ein Speichermittel (25) vorgesehen ist, um digitale Audiosignale zu speichern, die durch digitale Umsetzung des wiedergegebenen Signals aus dem erwähnten zweiten Aufzeichnungs- und Wiedergabegerät in dem erwähnten digitalen Audioprozessor gebildet werden, wobei der erwähnte Zeitzeichenvergleicher (22) durch sein Ausgangssignal eine Ausleseadresse des erwähnten Speichermittels so steuert, daß wiedergegebene Audiosignale, die mit den wiedergegebenen Videosignalen synchronisiert sind, die aus dem erwähnten Videosystem gewonnen werden, von dem erwähnten digitalen Audiosystem erzeugt werden.

4. Systemsynchronisiervorrichtung nach Anspruch 3, dadurch gekennzeichnet, daß das erwähnte Zeitzeichenumsetzmittel (15) durch ein eigenes Ausgangssteuersignal auch das erwähnte Videosystem so steuert, daß das zweite Zeitzeichen der digitalen Audiosignale, die in das erwähnte Speichermittel (25) eingeschrieben werden, ständig oder gleichzeitig zeitlich gegenüber dem ersten Zeitzeichen des wiedergegebenen Videosignals, das von dem erwähnten Videosystem erzeugt wird, vorverschoben wird.

5. Systemsynchronisiervorrichtung nach Anspruch 2, dadurch gekennzeichnet, daß das erwähnte Zeitzeichenumsetzmittel (15) einen Zeitzeichendecodierer (41) zum Decodieren von Daten des ersten Zeitzeichens und zum Erzeugen eines Steuersignals in Übereinstimmung mit dem Takt des ersten Zeitzeichens und einen Zeitzeichencodierer (42) zum Codieren der decodierten Daten aus dem erwähnten Zeitzeichendecodierer in das dritte Zeitzeichen des zweiten Systems oder des dem zweiten System entsprechenden Systems aufweist.

6. Systemsynchronisiervorrichtung nach Anspruch 5, dadurch gekennzeichnet, daß das erwähnte Synchronisiersignalumsetzmittel (13) aufweist: eine Schaltung (31-37), die in Abhängigkeit von dem ersten Synchronisiersignal ein drittes Synchronisiersignal, das mit dem ersten Synchronisiersignal synchron ist und eine Frequenz gleich einer Bildfrequenz des erwähnten ersten Fernsehsystems hat, und ein Taktsignal mit einer Frequenz erzeugt, die ein Vielfaches beider Bildfrequenzen des erwähnten ersten und zweiten Fernsehsystems ist, und ein Impulserzeugungsmittel (38) zum Erzeugen des zweiten Synchronisiersignals, das eine Frequenz aufweist, die gleich der Bildfrequenz des zweiten Fernsehsystems ist, und zwar mittels des erwähnten dritten Synchronisiersignals, des erwähnten Taktsignals und des Steuersignals aus dem erwähnten Zeitzeichendecodierer (41).

7. Systemsynchronisiervorrichtung nach Anspruch 6, dadurch gekennzeichnet, daß das erwähnte Impulserzeugungsmittel (38) einen Schaltkreis (47), dem das erwähnte dritte Synchronisiersignal zugeführt wird, und eine Impulserzeugungsschaltung (48) zum Erzeugen des zweiten Synchronisiersignals unter Verwendung eines Ausgangssignals des erwähnten Schaltkreises und des erwähnten Taktsignals aufweist, wobei der erwähnte Schaltkreis durch das Ausgangssteuersignal des erwähnten Zeitzeichendecodierers (41) gesteuert wird und das erwähnte Ausgangssignal des erwähnten Schaltkreises einen Takt steuert, mit dem der erwähnte Zeitzeichencodierer (42) arbeitet.

8. Systemsynchronisiervorrichtung nach Anspruch 6, dadurch gekennzeichnet, daß die Bildfrequenz des erwähnten ersten Fernsehsystems gleich 25 Hz und die Bildfrequenz des erwähnten zweiten Fernsehsystems gleich 30 Hz ist.

9. Systemsynchronisiervorrichtung nach Anspruch 2, dadurch gekennzeichnet, daß der erwähnte Zeitzeichenumsetzer (21) aufweist: einen Zeitzeichenleser (64) zum Erzeugen von Daten des ersten Zeitzeichens, das aus dem erwähnten Videosystem gewonnen wurde, und zum Erzeugen eines Schaltsignals in Übereinstimmung mit den vorbestimmten Bildadressen des ersten Zeitzeichens, einen Zeitzeichengenerator (65) und eine Taktschaltung (66), die durch ein eigenes Ausgangssignal einen Takt steuert, mit dem der erwähnte Zeitzeichengenerator arbeitet; und daß das erwähnte Synchronisiersignalumsetzmittel (13) aufweist: eine erste Schaltung (61), die in Abhängigkeit von dem ersten Synchronisiersignal ein drittes Synchronisiersignal, das mit dem ersten Synchronisiersignal synchron ist und eine Frequenz hat, die gleich einer Bildfrequenz des erwähnten ersten Fernsehsystems ist, und ein Taktsignal mit einer Frequenz erzeugt, die gleich einem Vielfachen beider Bildfrequenzen des erwähnten ersten und zweiten Fernsehsystems ist, einen Schaltkreis (62), der in Abhängigkeit von dem erwähnten Schaltsignal aus dem dritten Synchronisiersignal nur einen Signalteil durchläßt, der einer vorbestimmten Bildadresse des ersten Zeitzeichens entspricht, und eine zweite Schaltung (63) zum Erzeugen des zweiten Synchronisiersignals, das eine Frequenz hat, die gleich der Bildfrequenz des erwähnten zweiten Fernsehsystems ist, unter Verwendung des erwähnten Taktsignals und eines Ausgangssignals des erwähnten Schaltkreises, wobei der erwähnte Zeitzeichengenerator das dritte Zeitzeichen des zweiten Systems auf der Basis der Daten des ersten Zeitzeichens in Abhängigkeit von dem zweiten Synchronisiersignal und dem Schaltsignal erzeugt.

10. Systemsynchronisiervorrichtung nach Anspruch 1, dadurch gekennzeichnet, daß das erwähnte erste Zeitzeichen des ersten Systems ein EBU-Zeitzeichen (EBU = European Broadcasting Union = Europäische Rundfunkunion) ist, wobei das zweite Zeitzeichen des zweiten Systems ein SMPTE-Zeitzeichen (SMPTE = Society of Motion Picture and Television Engineers) ist, und das erwähnte Synchronisiersignalumsetzmittel (13) durch ein eigenes Ausgangssteuersignal das erwähnte digitale Audiosystem so steuert, daß eine Phasenlage jeder fünften Bildadresse des EBU-Zeitzeichens mit einer Phasenlage jeder sechsten Bildadresse des SMPTE-Zeitzeichens zusammenfällt.

11. Systemsynchronisiervorrichtung nach Anspruch 1, dadurch gekennzeichnet, daß das erwähnte Zeitzeichenumsetzmittel (15) eine Zentralprozessoreinheit aufweist.

**Revendications**

1. Un appareil de synchronisation de systèmes servant à obtenir un synchronisme entre un signal vidéo à l'intérieur d'un signal reproduit provenant d'un support d'enregistrement dans un premier appareil d'enregistrement et de reproduction employant un premier système de télévision et constituant un système vidéo (11) et des signaux audio reproduits à partir d'un support d'enregistrement sous la forme d'un signal vidéo dans un second appareil d'enregistrement et de reproduction employant un second système de télévision et constituant un système audio numérique (14) ainsi qu'un processeur audio numérique, caractérisé en ce que ledit appareil de synchronisation de systèmes comprend: un moyen de génération de signaux de synchronisation (12) servant à générer un premier signal de synchronisation déterminant une cadence avec laquelle ledit système vidéo (11) fonctionne, ledit premier signal de synchronisation étant appliqué audit système vidéo (11); un moyen de conversion de code temporel (15) servant à comparer un premier code temporel qui est celui d'un premier système et est à l'intérieur du signal reproduit provenant dudit premier appareil d'enregistrement et de reproduction avec un second code temporel qui est celui d'un second système et est à l'intérieur du signal reproduit provenant dudit second appareil d'enregistrement et de reproduction (23) et servant à générer un signal de commande ayant une cadence en conformité avec une cadence du premier code temporel, lesdits premier et second codes temporels indiquant chacun une position sur le support d'enregistrement; et un moyen de conversion de signal de synchronisation (13) servant à générer un second signal de synchronisation basé sur le premier signal de synchronisation provenant dudit moyen de génération de signaux de synchronisation (12) avec une cadence en réponse au signal de commande de sortie dudit moyen de conversion de code temporel (15), ledit second signal de synchronisation étant appliqué audit système audio numérique (14) et commandant une cadence avec laquelle ledit système audio numérique fonctionne de sorte que les phases des premier et second codes temporels coïncident pour chaque adresse d'image prédéterminée de l'un des premier et second codes temporels, ledit moyen de conversion de code temporel commandant par un signal de commande de sortie de celui-ci au moins ledit système audio numérique en réponse à une différence entre les premier et second codes temporels de façon que les points de départ des premier et second codes temporel coïncident.

2. Un appareil de synchronisation de systèmes comme revendiqué dans la revendication 1, caractérisé en ce que ledit moyen de conversion de code temporel (13) comprend un convertisseur de code temporel (21) servant à convertir le premier code temporel issu dudit système vidéo en un troisième code temporel qui est celui du second système ou d'un système en conformité avec le second système et servant à appliquer audit moyen de conversion de signaux de synchronisation (13) un signal de commande ayant une cadence en conformité avec la cadence du premier code temporel, et un comparateur de code temporel (22) servant à comparer le troisième code temporel provenant dudit convertisseur de code temporel et le second code temporel provenant dudit système audio numérique.

3. Un appareil de synchronisation de systèmes comme revendiqué dans la revendication 2, caractérisé en ce qu'il comporte en outre un moyen de mémoire (25) servant à mémoriser des signaux audio numériques obtenus par conversion de manière numérique du signal reproduit à partir dudit second appareil d'enregistrement et de reproduction dans ledit processeur audio numérique, ledit comparateur de code temporel (22) commandant par un signal de sortie de celui-ci une adresse d'extraction par lecture dudit moyen de mémoire de façon que les signaux audio reproduits en synchronisme avec les signaux vidéo reproduits obtenus à partir dudit système vidéo soient produits à partir dudit système audio numérique.

4. Un appareil de synchronisation de systèmes comme revendiqué dans la revendication 3, caractérisé en ce que ledit moyen de conversion de code temporel (15) commande également par un signal de commande de sortie de celui-ci ledit système vidéo de façon que le second code temporel des signaux audio numériques écrits dans ledit moyen de mémoire (25) soit avancé de manière constante dans le temps ou simultanément dans le temps par rapport au premier code temporel du signal vidéo reproduit obtenu à partir dudit système vidéo.

5. Un appareil de synchronisation de systèmes comme revendiqué dans la revendication 2, caractérisé en ce que ledit moyen de conversion de code temporel (15) comprend un décodeur de code temporel (41) permettant de décoder des données du premier code temporel et de produire un signal commande conforme à la cadence du premier code temporel, et un encodeur de code temporel (42) permettant de coder les données décodées provenant dudit décodeur de code temporel dans le troisième code temporel qui est au second système ou au système conforme au second système.

6. Un appareil de synchronisation de systèmes comme revendiqué dans la revendication 5, caractérisé en ce que ledit moyen de conversion de signaux de synchronisation (13) comprend un circuit (31-37) répondant au premier signal de synchronisation pour produire un troisième signal de synchronisation qui est en synchronisme avec le premier signal de synchronisation et présente une fréquence égale à une fréquence d'image dudit premier système de télévision et un signal d'horloge ayant une fréquence qui est un multiple des deux fréquences d'image desdits premier et second systèmes de télévision, et un moyen de génération d'impulsions (38) permettant de produire le second signal de synchronisation ayant une fréquence égale à la fréquence d'image dudit second système de télévision par l'utilisation dudit troisième signal de synchronisation, dudit signal d'horloge et du signal de commande provenant dudit décodeur de code temporel (41).

7. Un appareil de synchronisation de systèmes comme revendiqué dans la revendication 6, caractérisé en ce que ledit moyen de génération d'impulsions (38) comprend un circuit de commutation (47) appliqué audit troisième signal de synchronisation et un circuit de génération d'impulsions (48) servant à produire le second signal de synchronisation par l'utilisation d'une sortie dudit circuit de commutation et dudit signal d'horloge, ledit circuit de commutation étant commandé par le signal de commande de sortie dudit décodeur de code temporel (41), ladite sortie dudit circuit de commutation commandant une cadence avec laquelle ledit encodeur de code temporel (42) fonctionne.

8. Un appareil de synchronisation de systèmes comme revendiqué dans la revendication 6, caractérisé en ce que la fréquence d'image dudit premier système de télévision est égale à 25 Hz et la fréquence d'image dudit second système de télévision est égale à 30 Hz.

9. Un appareil de synchronisation de systèmes comme revendiqué dans la revendication 2, caractérisé en ce que ledit convertisseur de code temporel (21) comprend un lecteur de code temporel (64) servant à produire des données du premier code temporel obtenus à partir dudit système vidéo et servant à produire un signal de commutation en correspondance avec des adresses d'image prédéterminées du premier code temporel, un générateur de codes temporels (65) et un circuit de cadence (66) servant à commander par une sortie de celui-ci une cadence avec laquelle ledit générateur de codes temporels fonctionne; en ce que ledit moyen de conversion de signaux de synchronisation (13) comprend un premier circuit (61) répondant au premier signal de synchronisation pour générer un troisième signal de synchronisation qui est en synchronisme avec le premier signal de synchronisation et présente une fréquence égale à une fréquence d'image dudit premier système de télévision et un signal d'horloge ayant une fréquence qui est un multiple des deux fréquences d'image desdits premier et second systèmes de télévision, un circuit de commutation (62) répondant audit signal de commutation pour ne laisser passer qu'une partie du troisième signal de synchroniation correspondant à une adresse d'image prédéterminée du premier code temporel, et un second circuit (63) servant à produire le second signal de synchronisation qui présente une fréquence égale à la fréquence d'image dudit second système de télévision par l'utilisation dudit signal d'horloge et d'une sortie dudit circuit de commutation, ledit générateur de codes temporels produisant le troisième code temporel qui est celui du second système sur la base des données du premier code temporel en réponse au second signal de synchronisation et au signal de commutation.

10. Un appareil de synchronisation de systèmes comme revendiqué dans la revendication 1, caractérisé en ce que ledit premier code temporel qui est celui du premier système est un code temporel EBU, ledit second code temporel qui est celui du second système est un code temporel SMPTE, et en ce que ledit moyen de conversion de signaux de synchronisation (13) commande par un signal de commande de sortie de celui-ci ledit système audio numérique de façon qu'une phase de chaque cinquième adresse d'image du code temporel EBU coïncide avec une phase de chaque sixième adresse d'image du code temporel SMPTE.

11. Un appareil de synchronisation de systèmes comme revendiqué dans la revendication 1, caractérisé en ce que ledit moyen de conversion de code temporel (15) comprend une unité centrale de traitement.

# FIG.1

# FIG.2

FIG.3

## FIG. 4

SYNC CONV ⟋13

30 → SYNC SEP ⟋31

VXO ⟋34

½ FREQ DIV ⟋35

PULSE GENE ⟋38 → 43, 44

PHASE COMP ⟋33

1/196 FREQ DIV ⟋36

FRAME DET ⟋32

1/315 FREQ DIV ⟋37

40 → TIM CODE DECOD ⟋41

TIM CODE ENCOD ⟋42 → 45 TIM CODE CONV ⌐21

## FIG. 5

38

SW ⟋47

PULSE GENE CKT ⟋48 ⟋52 → 43, 44

49  50  51

# FIG.6

```
START
  │
  ▼
PLAY VTRs ─── 53
  │
  ▼
COMP TIME
CODES ─── 54
  │
  ▼
CONTL
VTRs ─── 55
  │
  ▼
PLAY VTRs ─── 56
```

```
STORE AUD
DATA ─── 57
  │
  ▼
CONTL
READ-OUT ─── 58
  │
  ▼
 ◇ 59
VTRs
STOPPED ── NO
  ?
  │ YES
  ▼
END
```

# FIG.7

SYNC CONV

```
30    PULSE      61   63    PULSE        13      44
o──── GENE ───────────────── GENE ──────────────o

                    62── SW CKT

40    TIM CODE              TIM CODE              45
o──── READ                  GENE ────────────────o
       64                    65

                            66── TIM
                                 CKT ─── 21
```

TIM CODE CONV

4

# FIG.8

EP 0 176 324 B1

## FIG. 9A

START — 130

B

INITIALIZE — 131

ENTER EBU
TIM CODE — 132

DATA
CORRECT? — 133
NO →
YES ↓

READ EBU
TIM CODE — 134

FRM ADDR
4,9,14,19,24
? — 135
NO ←
YES ↓

CONTL SW
CKT 62 — 136

A

DATA
IDENTICAL
? — 144
NO →
YES ↓

DISPLAY
DATA — 145

## FIG. 9B

A

CALC SMPTE
TIM CODE — 137

CONTL SW
CKT 62 — 138

SET OK
FLAG — 139

INT ? — 140
YES →
NO ↓

CALC SMPTE
TIM CODE
& LOAD — 141

CONTIN
FOR 7 FRM
? — 142
YES →
NO ↓

RESET OK
FLAG — 143

B